# EUROPEAN PATENT APPLICATION

(11) **EP 4 640 381 A1**
(43) Date of publication of application: **29.10.2025**
(21) Application number: 23906589.9
(22) Date of filing: 23.11.2023
(51) Int. Cl.: B25J 13/08

(54) **ROBOT CONTROL SYSTEM**

(30) Priority: 23.12.2022 JP 2022206736
(71) Applicant: DENSO CORPORATION, Kariya-city, Aichi-pref. 448-8661 (JP)
(72) Inventor: NITANAI, Hideo, Kariya-city, Aichi-pref. 448-8661 (JP)
(74) Representative: Winter, Brandl - Partnerschaft mbB
(86) International application number: PCT/JP2023/042090
(87) International publication number: WO 2024/135220

(57) **Abstract**

A robot control system (10) includes: a robot (20) that performs an operation on a target object (W) in each of a plurality of work areas; a movable camera (30) that is capable of moving separately from the robot and respectively capturing images of the target object in the plurality of work areas; and an object recognition unit (50) that is capable of recognizing a position of an object based on an image captured by the movable camera from a predetermined position (P1, P2). The movable camera acquires a predetermined image captured to include a reference object (B1) serving as a positional reference and the target object in a field of view. The object recognition unit registers a position of the reference object recognized based on an image captured from the predetermined position as a reference position in advance, calculates a deviation amount of a position of the movable camera from the predetermined position based on the reference position and the position of the reference object recognized based on the predetermined image, and recognizes a position of the target object based on the deviation amount and the predetermined image.

## Description

### [Cross-Reference to Related Application]

The present application is based on and claims the benefit of priority from Japanese Patent Application No. 2022-206736, filed on December 23, 2022, the description of which is incorporated herein by reference.

### [Technical Field]

The present disclosure relates to a robot control system that includes a camera and a robot.

### [Background Art]

Conventionally, there is a fixed-camera robot control system in which a camera attached to a fixed structure set above a work area of a robot captures an image of a workpiece in the work area, and a position of the workpiece is recognized through processing of the image captured by the camera (refer to PTL 1). In addition, PTL 1 also describes an on-hand-camera robot control system in which the camera is attached to the robot.

### [Citation List]

### [Patent Literature]

[PTL 1] WO 2020/121399 A1

### [Summary]

Incidentally, in cases such as when the robot retrieves a workpiece (target object) from a supply section for workpieces, carries the workpiece to a storage section for workpieces, and stores the workpiece, for example, an operation may be performed on the workpiece at each of the supply section and the storage section (a plurality of work areas). **In** this case, in the fixed-camera robot control system, a camera is required for each work area. **In** addition, in the on-hand-camera robot control system, an operation cannot be performed on the workpiece until the camera attached to the robot captures the image of the workpiece and the position of the workpiece is recognized. Therefore, a cycle time from the workpiece being retrieved until the workpiece is stored becomes long.

The present disclosure has been achieved in light of the above-described issues. The main object of the present disclosure is to suppress increase in a number of required cameras and suppress increase in cycle time even in cases in which a robot performs an operation on a target object at each of a plurality of work areas.

A first means for solving the above-described issues provides a robot control system that includes: a robot that performs an operation on a target object in each of a plurality of work areas; a movable camera that is capable of moving separately from the robot and respectively capturing images of the target object in the plurality of work areas; and an object recognition unit that is capable of recognizing a position of an object based on an image captured by the movable camera from a predetermined position. **In** the robot control system, the movable camera acquires a predetermined image captured to include a reference object serving as a positional reference and the target object in a field of view. The object recognition unit registers a position of the reference object recognized based on an image captured from the predetermined position as a reference position in advance, calculates a deviation amount of a position of the movable camera from the predetermined position based on the reference position and the position of the reference object recognized based on the predetermined image, and recognizes a position of the target object based on the deviation amount and the predetermined image. The robot performs an operation on the target object based on the position of the target object recognized by the object recognition unit.

As a result of the above-described configuration, the robot performs an operation on the target object in each of the plurality of work areas. Therefore, images are respectively required to be captured of the target object in the plurality of work areas for the position of the target object in each of the plurality of work areas to be recognized. **In** this regard, the movable camera is capable of moving separately from the robot and respectively capturing images of the target object in the plurality of work areas. **In** addition, the object recognition unit is capable of recognizing the position of an object based on an image captured by the movable camera from a predetermined position. Therefore, as a result of the movable camera being moved to the predetermined position and respectively capturing images of the target object in the plurality of work areas, the position of the target object can be recognized in each of the plurality of work areas. Consequently, increase in the required number of cameras can be suppressed even in cases in which the robot performs an operation on the target object in each of the plurality of work areas.

**In** addition, the movable camera acquires the predetermined image captured to include the reference object serving as the positional reference and the target object in the field of view. Therefore, the reference object and the target object are included in the field of view. The object recognition unit registers the position of the reference object recognized based on the image captured from the predetermined image as the reference position in advance. Here, if the position of the reference object recognized based on the image captured by the movable camera deviates from the reference position, the deviation amount is attributed to the deviation amount of the position of the movable camera from the predetermined position. Therefore, even in cases in which the position of the movable camera deviates from the predetermined position, as a result of correction being performed using the deviation amount, the object recognition unit is capable of recognizing the position of the object based on the captured image. In this regard, the object recognition unit calculates the deviation amount of the movable camera from the predetermined position based on the reference position and the position of the reference object recognized based on the predetermined image, and recognizes the position of the target object based on the deviation amount and the predetermined image. Therefore, the position of the target object can be accurately recognized even in cases in which the movable camera is unable to accurately return to the predetermined position. In addition, the robot can accurately perform an operation on the target object based on the position of the target object recognized by the object recognition unit.

Furthermore, for example, the movable camera can recognize the position of the target object in one work area, and the robot can perform an operation on the target object in another work area in which a position in which the target object is stored is already recognized. That is, recognition of the position of the target object by the movable camera and the operation on the target object by the robot can be performed in parallel. Consequently, increase in cycle time from when recognition of the position of the target object by the movable is started until the operation on the target object is ended in the plurality of work areas can be suppressed.

According to a second means, a plurality of robots are included. The reference object is provided in each of the plurality of work areas of the plurality of robots. The movable camera is capable of respectively capturing an image of the target object in each of the plurality of work areas of the plurality of robots. As a result of a configuration such as this, recognition of the position of the target object in the operations of a plurality of robots can be performed by a single movable camera. Consequently, the number of required cameras can be further reduced.

According to a third means, the movable camera moves to a position in which the reference object and the target object are included in the field of view, when the reference object and the target object are not included in the field of view, and acquires the predetermined image. As a result of a configuration such as this, even in cases in which the movable camera has moved to a position in which the reference object and the target object are not included in the field of view, as a result of the movable camera being moved and the position being changed, the predetermined image captured to include the reference object and the target object in the field of view can be acquired.

Specifically, as according to a fourth means, the object recognition unit can be made capable of recognizing a position of an object in a coordinate system of the robot as the position of the object based on an image captured by the movable camera from the predetermined position by performing calibration to calibrate a corresponding relationship between a coordinate system of the movable camera and the coordinate system of the robot.

According to a fifth means, the calibration is performed using a three-dimensional scanner that has higher accuracy in detecting a position of an object than the movable camera. The reference position is registered in advance using the three-dimensional scanner. As a result of a configuration such as this, the corresponding relationship between the coordinate system of the movable camera and the coordinate system of the robot can be accurately calibrated. Furthermore, the reference position that is the position of the reference object recognized based on an image captured from the predetermined position can be more accurately acquired. Consequently, the deviation amount of the position of the movable camera from the predetermined position can be more accurately calculated. Furthermore, the position of the target object can be more accurately recognized.

According to a sixth means, the robot performs an operation of gripping the target object in one work area among the plurality of work areas, moving the target object to another work area, and releasing the target object. As a result of a configuration such as this, even in cases in which an operation in which the target object is gripped in one work area among the plurality of work areas and released (placed) after being moved to another work area is performed, a camera is not required for each work area. In addition, the operation of gripping the target object can be performed by the robot in a first work area in which the position of the target object is already recognized, and a position in which the target object is stored can be recognized by the movable camera in a second work area in which the target object is released. As a result, increase in the number of required cameras can be suppressed and increase in cycle time can be suppressed.

According to a seventh means, the object recognition unit calculates a deviation amount of the position of the movable camera from the predetermined position based on the reference position and the position of the reference object recognized based on the predetermined image, and recognizes the position of the target object based on the deviation amount and the predetermined image, before the target object is gripped in the one work area among the plurality of work areas. The robot performs the operation of gripping the target object based on the position of the target object recognized by the object recognition unit. As a result of a configuration such as this, the position of the target object can be accurately recognized before the target object is gripped, and the target object can be accurately gripped based on the accurately recognized position of the target object.

A variation in relative positions of the robot and the target object occurs when the robot grips the target object in one work area. In this case, a variation may occur in a position in which the target object is placed in the operation of moving the gripped target object to another work area and releasing the target object.

In this regard, according to an eighth means, the object recognition unit calculates a deviation amount of the position of the movable camera from the predetermined position based on the reference position and the position of the reference object recognized based on the predetermined image, and recognizes the position of the target object based on the deviation amount and the predetermined image, after the target object is gripped in the one work area among the plurality of work areas. The robot performs the operation of moving the target object from the one work area to another work area and releasing the target object based on the position of the target object recognized by the object recognition unit. As a result of a configuration such as this, the position of the target object can be accurately recognized after the target object is gripped, and the target object can be moved from the one work area to another work area and released in an accurate position (placed in an accurate position).

According to a ninth means, the reference object is a block composed of an asymmetrical polyhedron disposed in a vicinity of the target object. As a result of a configuration such as this, characteristics of the reference object are easily ascertained and, therefore, the object recognition unit can easily recognize the position of the reference object.

According to a tenth means, the reference object is a portion of equipment present in a vicinity of the target object. As a result of a configuration such as this, a portion of equipment present in the vicinity of the target object can be used as the reference object and, therefore, a special block or the like is not required to be disposed as the reference object.

### [Brief Description of Drawings]

The above-described object, other objects, characteristics, and advantages of the present disclosure will be further clarified through the detailed description herebelow, with reference to the accompanying drawings. The drawings are as follows:
Fig. 1 is a schematic diagram of a robot control system;
Fig. 2 is a flowchart of steps for initial setting; and
Fig. 3 is a flowchart of steps for control during robot operation.

### [Description of Embodiments]

An embodiment actualizing a robot control system that retrieves a workpiece from a supply section, processes the workpiece, and stores the workpiece in a storage section will hereinafter be described with reference to the drawings.

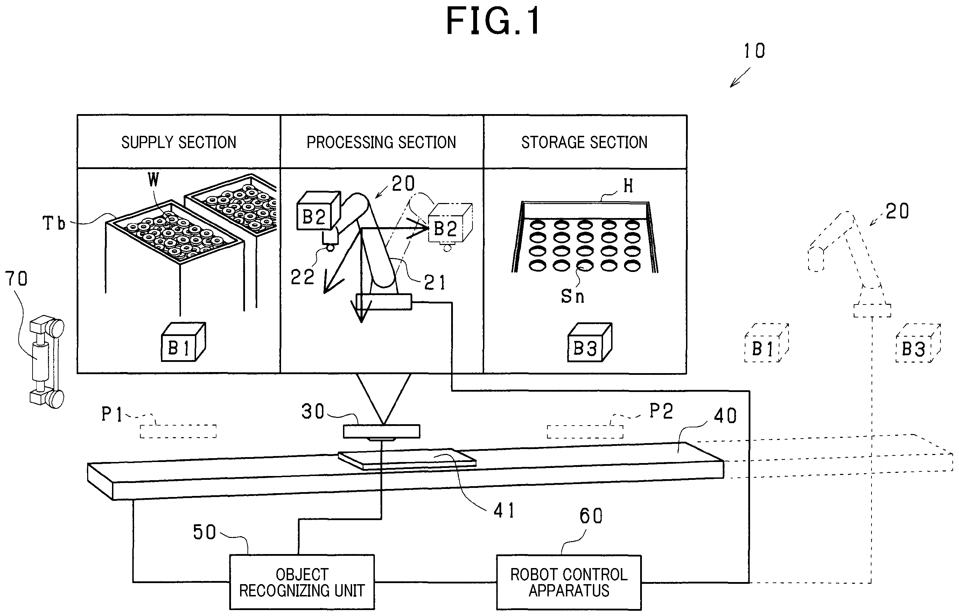

As shown in Fig. 1, a robot control system 10 includes a robot 20, a camera 30, a slider 40, an object recognition unit 50, a robot control apparatus 60, and the like.

For example, the robot 20 may be a single-arm, vertical articulated robot. The robot 20 grips (grasps) a workpiece W in a supply section and moves the workpiece W to a processing section. After processing the workpiece W in the processing section with a cutting machine or the like, the robot 20 moves the workpiece W to a storage section and places the workpiece W (releases the workpiece W) in each placement portion SN of a storage case H. That is, the robot 20 performs an operation on a target object in each of a plurality of work areas. A gripping tool 22 (work tool) is mounted in a tip end portion of an arm portion 21 of the robot 20.

The workpiece W (target object) is a three-dimensional object having a predetermined shape. A plurality of workpieces W of the same shape are stored in a circulation box Tb in an unarranged manner. That is, positions and orientations of the workpieces W are unspecified.

The camera 30 (movable camera) is a stereo camera that captures three-dimensional images. The camera 30 is attached to a movable portion 41 of the slider 40. The slider 40 can move the movable portion 41 back and forth in a linear manner and stop the movable portion 41 in an arbitrary position on a straight line. A driving state of the slider 40 is controlled by, for example, the object recognition unit 50. The camera 30 is attached to the movable portion 41 at an orientation enabling the camera 30 to capture images of the supply section, the processing section, and the storage section (work areas) by moving together with the movable portion 41. In the supply section, an angle of view of the camera 30 is an angle of view at which all workpieces W in the circulation box Tb and a reference block B1 can be included in a field of view. Furthermore, in the storage section, the angle of view of the camera 30 is an angle of view in which all placement portions Sn in the storage case H and a reference block B3 can be included in the field of view. The reference blocks B1 and B3 (reference objects) serve as positional references and, for example, may be blocks (three-dimensional objects) that are each composed of an asymmetrical polyhedron (a shape having a characteristic portion) and disposed near (in the vicinity of) the workpiece W and the placement portion Sn. For example, the placement portion Sn (a position in which the target object is stored) may be formed as a recessing portion corresponding to a shape of the workpiece W after processing. That is, the camera 30 is capable of moving separately from the robot 20 and capturing images of each target object in a plurality of work areas. The camera 30 provides a function for automatically adjusting a focal position when capturing images.

The camera 30 is moved between a first imaging position P1 and a second imaging position P2. In the first imaging position P1, the camera 30 captures a three-dimensional image to include all workpieces W in the circulation box Tb and the reference block B1 in the same imaging field of view. In addition, in the second imaging position P2, the camera 30 captures a three-dimensional image to include all placement portions Sn in the storage case H and the reference block B3 in the same imaging field of view. Here, the first imaging position P1 and the second imaging position P2 can be set in advance as positions from which the camera 30 can capture an image of each work area or can be set each time based on the three-dimensional image.

The object recognition unit 50 includes an image processing unit, a storage unit, an input/output interface, and the like. The object recognition unit 50 performs calibration to calibrate a corresponding relationship between a coordinate system of the camera 30 and a coordinate system of the robot 20. The object recognition unit 50 performs calibration in a state in which the camera 30 is moved to the first imaging position P1 and the second imaging position P2 (predetermined position), respectively. For example, a predetermined marker B2 may be attached to a tip end of the arm portion 21 of the robot 20, and the camera 30 captures an image of the marker B2 while the arm portion 21 is being operated. A calibration board on which a predetermined dot pattern or the like is printed, a block similar to the above-described reference blocks B1 and B3, or the like can be used as the marker B2. As a result, the object recognition unit 50 acquires parameters for converting a position and attitude (position) of an object in the coordinate system of the camera 30 recognized based on an image captured by the camera 30 from an imaging position during calibration to a position and attitude (position) of the object in the coordinate system of the robot 20. The parameters include information on the first imaging position P1 and the second imaging position P2. That is, by performing calibration, the object recognition unit 50 can recognize a position and attitude of an object in the coordinate system of the robot 20 as the position and attitude of the object based on an image captured by the camera 30 from a predetermined position. Hereafter, the position and attitude of the object in the coordinate system of the robot 20 may simply be referred to as the position and attitude of the object. The object recognition unit 50 recognizes (calculates) the position and attitude of the object using the three-dimensional image (three-dimensional image data) acquired by the camera 30. Specifically, the object recognition unit 50 calculates the position, attitude (orientation), and the like of the object from the three-dimensional image acquired by the camera 30. The object recognition unit 50 recognizes the positions and attitudes of the workpiece W, the reference blocks B1 and B3, and the placement portions Sn in the storage case H based on the three-dimensional image.

The robot control apparatus 60 includes a central processing unit (CPU), a read-only memory (ROM), a random access memory (RAM), an input/output interface, and the like. The robot control apparatus 60 controls swinging and rotation of the arm portion 21 of the robot 20, operation of the gripping tool 22, and the like. The robot control apparatus 60 controls each operation of the robot 20 based on the position and attitude of the workpiece W recognized by the object recognition unit 50. Here, each operation of the robot 20 is taught in advance and stored in the robot 20. Therefore, the robot control apparatus 60 automatically corrects teaching data based on the position and attitude of the workpiece W calculated by the object recognition unit 50.

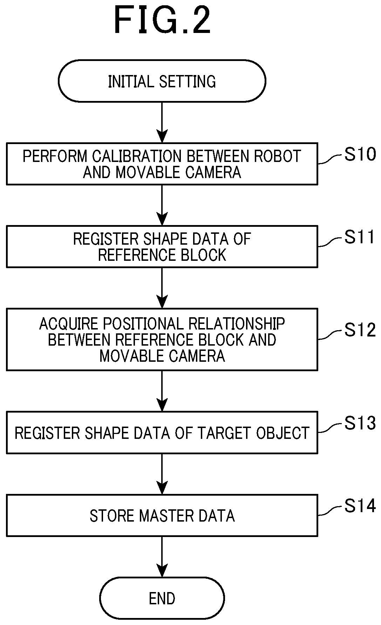

Next, steps for initial setting performed before the robot 20 is operated will be described with reference to a flowchart in Fig. 2. This series of processes are performed by the object recognition unit 50.

First, calibration of the robot 20 and the camera 30 is performed (S10). Specifically, the above-described calibration is performed in a state in which the camera 30 is moved to the first imaging position P1 by the slider 40. At this time, the three-dimensional image captured by the camera 30 includes all workpieces W in the circulation box Tb and the reference block B1. Here, the circulation box Tb and the reference block B1 may be arranged after calibration to include all workpieces W in the circulation box Tb and the reference block B1 in the three-dimensional image captured by the camera 30.

Next, shape data of the reference block B1 is registered (S11). Specifically, three-dimensional shape data of the reference block B1 is acquired and registered by the three-dimensional image captured by the camera 30 being processed. Here, the three-dimensional shape data is acquired as data on a point group indicating a position of each point on an object.

Next, a positional relationship between the reference block B1 and the camera 30 is acquired (S12). Specifically, the position and attitude of the reference block B1 in the coordinate system of the camera 30 is recognized based on the three-dimensional image of the reference block B1 captured by the camera 30 from the first imaging position P1. The position and attitude (position) of the reference block B1 in the coordinate system of the camera 30 is converted to the position and attitude (position) of the reference block B1 in the coordinate system of the robot 20 using the above-described parameters. Then, the position and attitude (reference position) of the reference block B1 in the coordinate system of the robot 20 is acquired as the positional relationship between the reference block B1 and the camera 30. That is, the position and attitude of the reference block B1 recognized based on the three-dimensional image of the reference block B1 captured by the camera 30 from the first imaging position P1 is acquired as the positional relationship between the reference block B1 and the camera 30.

Next, shape data of the target object is registered (S13). Specifically, three-dimensional shape data of the workpiece W is acquired and registered by the three-dimensional image captured by the camera 30 being processed. Here, because the plurality of workpieces W have the same shape, all that is required is for the three-dimensional shape data of one representative workpiece W to be acquired.

Next, master data is stored (S14). Specifically, the three-dimensional shape data of the reference block B1, the position and attitude of the reference block B1 in the coordinate system of the robot 20, and the three-dimensional shape data of the workpiece W, described above, are stored as the master data used during operation of the robot 20. Subsequently, this series of processes is ended (END).

In addition, the object recognition unit 50 performs processes similar to above-described S10 to S14 in a state in which the camera 30 is moved to the second imaging position P2 by the slider 40. Here, the reference block B3 serves as the reference block and the placement portions Sn in the storage case H are considered to correspond with the target object.

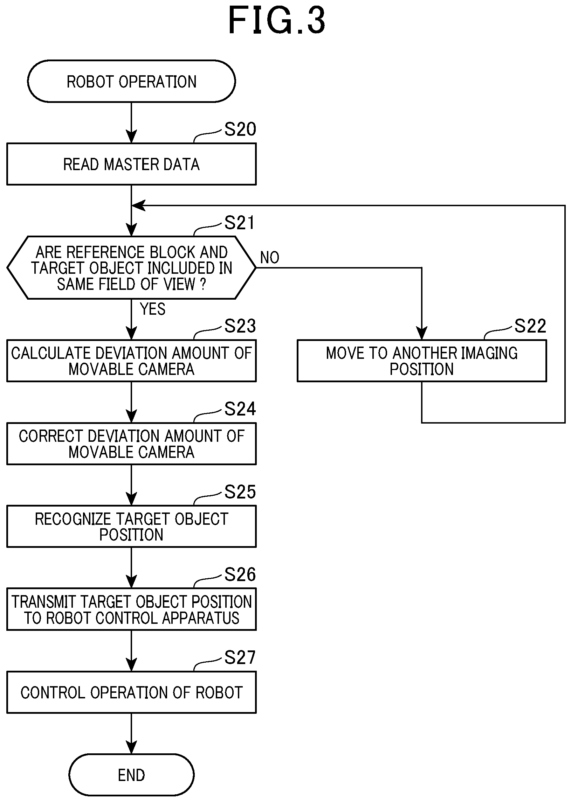

Next, steps for control during operation of the robot 20 will be described with reference to a flowchart in Fig. 3. In this series of processes, the processes at S20 to S26 are performed by the object recognition unit 50 and the process at S27 is performed by the robot control apparatus 60. Here, an example in which this series of processes is performed by the camera 30 being moved to the first imaging position P1 by the slider 40 while the robot 20 is operating in the storage section will be described. When the camera 30 is moved to the first imaging position P1 after being moved to another position from the first imaging position P1 by the slider 40, a deviation (error) occurs between the first imaging position P1 and the actual position of the camera 30.

First, the master data is read (S20). Specifically, the master data stored in the above-described initial setting is read.

Next, whether the reference block and the target object are included in the same imaging field of view is determined (S21). Specifically, whether the reference block B1 and all workpieces W are included in the same imaging field of view (a single imaging field of view) is determined. This determination can be performed by so-called matching based on the three-dimensional image captured by the camera 30 and the master data (the three-dimensional shape data of the reference block B1 and the three-dimensional shape data of the workpiece W). In this determination, when the reference block B1 and all workpieces W are determined to not be included in the same imaging field of view (NO at S21), the camera 30 is moved to another imaging position by the slider 41 (S22). Specifically, the movable portion 41 of the slider 40 is moved by a predetermined amount in either of the linear trajectories of the slider 40. Here, a movement direction and a movement amount of the movable portion 41 to include the reference block B1 and all workpieces W in the same imaging field of view can also be determined based on the three-dimensional image captured in the above-described determination. Subsequently, the processes are performed again from the process at S21. That is, the camera 30 moves to a position in which the reference block B1 and all workpieces W are included in the same imaging field of view and captures a three-dimensional image (predetermined image) when the reference block B1 and all workpieces W are not included in the same imaging field of view.

In the determination at S21, when the reference block B1 and all workpieces W are determined to be included in the same imaging field of view (YES at S21), a deviation amount of the movable camera is calculated (S23). Specifically, a deviation amount of a current position (position) of the camera 30 from the first imaging position P1 is calculated. Here, if the position of the reference block B1 recognized based on the three-dimensional image (predetermined image) captured by the camera 30 at the current position deviates from the position (reference position) of the reference block B1 in the master data, the deviation amount corresponds (is attributed) to the deviation amount of the current position of the camera 30 from the first imaging position P1. Therefore, the deviation amount of the current position of the camera 30 from the first imaging position P1 is calculated based on the position of the reference block B1 recognized based on the three-dimensional image captured by the camera 30 in the current position and the position of the reference block B1 in the master data.

Next, the deviation amount of the movable camera is corrected (S24). Specifically, the parameters for converting the position and attitude (position) of the object in the coordinate system of the camera 30 to the position and attitude (position) of the object in the coordinate system of the robot 20 is corrected based on the deviation amount (the deviation amount is reflected in the parameters).

Next, the position and attitude (position) of the target object is recognized (S25). Specifically, the position and attitude of the workpiece W in the coordinate system of the camera 30 is recognized based on the three-dimensional image of the workpiece W captured by the camera 30 from the current position. At this time, the workpiece W to be gripped is selected from the plurality of workpieces W and the position and attitude of the selected workpiece W is recognized. Then, the position and attitude of the workpiece W in the coordinate system of the camera 30 is converted to the position and attitude of the workpiece W in the coordinate system of the robot 20 using the corrected parameters. That is, the deviation amount of the current position (position) of the camera 30 from the first imaging position P1 (predetermined position) is calculated based on the position (reference position) of the reference block B1 in the master data and the position of the reference block B1 recognized based on the three-dimensional image (predetermined image) captured with the reference block B1 and the workpiece W included in the field of view, and the position and attitude (position) of the workpiece W is recognized based on the deviation amount and the predetermined image.

Next, the position and attitude (position) of the target object is transmitted to the robot control apparatus 60 (S26). Specifically, the object recognition unit 50 transmits the recognized position and attitude of the workpiece W to the robot control apparatus 60.

Next, the operation of the robot 20 is controlled (S27). Specifically, the robot control apparatus 60 operates the arm portion 21 and the gripping tool 22 to grasp the workpiece W based on the received position and attitude of the workpiece W (performs an operation on the workpiece W). Meanwhile, while the robot 20 is operating in the supply section, the object recognition unit 50 moves the camera 30 to the second imaging position P2 and performs processes similar to S20 to S26 for the reference block B3 and the placement portions Sn in the storage case H. After the workpiece W is gripped in the supply section, the workpiece W is moved to the processing section and processed by the cutting machine or the like. After the workpiece W is processed, the workpiece W is moved to the storage section and the is placed in the placement portion Sn in the storage case H. At this time the robot control apparatus 60 places the workpiece W in a target placement portion Sn based on the position and attitude of each placement portion Sn in the storage case H recognized in advance while the robot 20 is operating in the supply section. Then, while the robot 20 is operating in the supply section, the object recognition unit 50 moves the camera 30 to the first imaging position P1 again and performs the processes at S20 to S26 again. Subsequently, the above-described processes are repeated until operation on all workpieces W is completed.

The present embodiment described in detail above have the following advantages.

The camera 30 is capable of moving separately from the robot 20 and respectively capturing images of the workpiece W and the placement portion Sn in the storage case H in a plurality of work areas. In addition, the object recognition unit 50 is capable of recognizing the position of an object based on the images captured from the first imaging position P1 and the second imaging position P2 by the camera 30. Therefore, as a result of the camera 30 being moved to the first imaging position P1 and the second imaging position P2 and respectively capturing images of the workpiece W and the placement portion Sn in the storage case H in the plurality of work areas, the positions of the workpiece W and the placement portion Sn in the storage case H in the plurality of work areas can be recognized. Consequently, increase in the number of required cameras can be suppressed even in cases in which the robot 20 performs an operation on the workpiece W in each of the plurality of work areas.

The object recognition unit 50 calculates the deviation amount of the position of the camera 30 from the first imaging position P1 based on the reference position of the reference block B1 recognized based on the three-dimensional image captured from the first imaging position P1 and the position of the reference block B1 recognized based on the predetermined image captured with the reference block B1 and the workpiece W being included in the same field of view. Then, the position of the workpiece W is recognized based on the deviation amount and the predetermined image. Therefore, the position of the workpiece W can be accurately recognized even in cases in which the camera 30 is unable to accurately return to the first imaging position P1. In addition, the robot 20 can accurately perform an operation on the workpiece W based on the position of the workpiece W recognized by the object recognition unit 50. This further similarly applies to the second imaging position P2, the reference block B3, and the placement portion Sn in the storage case H.

The position of the workpiece W can be recognized by the camera 30 in the supply section and an operation can be performed on the workpiece W by the robot 20 in the storage section in which the position of the placement portion Sn in the storage case H is already recognized. That is, recognition of the position of the workpiece W by the camera 30 and an operation on the workpiece W to the placement portion Sn by the robot 20 can be performed in parallel. Therefore, increase in the cycle time from when recognition of the position of the workpiece W by the camera 30 is started until the operation on the workpiece W is ended in the plurality of work areas can be suppressed. In addition, the position of the placement portion Sn in the storage case H can be recognized by the camera 30 in the storage section and an operation can be performed on the workpiece W by the robot 20 in the supply section in which the position of the workpiece W is already recognized.

The camera 30 acquires the predetermined image by moving to a position in which the reference block B1 and the workpiece W are included in the same field of view when the reference block B1 and the workpiece W are not included in the same field of view. As a result of a configuration such as this, even when the camera 30 moves to a position in which the reference block B1 and the workpiece W are not included in the same field of view, as a result of the camera 30 being moved and the position being changed, the predetermined image captured with the reference block B1 and the workpiece W included in the same field of view can be acquired.

The robot 20 performs an operation of gripping the workpiece W in the supply section among the plurality of work areas and releasing the workpiece W after moving the workpiece W to the storage section. As a result of a configuration such as this, even in cases in which an operation in which the workpiece W is gripped in one work area among a plurality of work areas and released (placed) after being moved to another work area is performed, a camera is not required for each work area. In addition, the operation of gripping the workpiece W can be performed by the robot 20 in the supply section in which the position of the workpiece W is already recognized, and the position of the placement portion Sn in the storage case H can be recognized by the camera 30 in the storage section in which the workpiece W is released. As a result, increase in the number of required cameras can be suppressed and increase in cycle time can be suppressed.

Before the robot 20 grips the workpiece W in the supply section, among the plurality of work areas, the object recognition unit 50 calculates the deviation amount of the current position of the camera from the first imaging position P1 based on the reference position and the position of the reference block B1 recognized based on the predetermined image, and recognizes the position and attitude of the workpiece W based on the deviation amount and the predetermined image. Then, the robot 20 performs the operation of gripping the workpiece W based on the position and attitude of the workpiece W recognized by the object recognition unit 50. As a result of a configuration such as this, the position and attitude of the workpiece W can be accurately recognized before the workpiece W is gripped, and the workpiece W can be accurately gripped based on the accurately recognized position and attitude of the workpiece W.

The reference block B1 is a block composed of an asymmetrical polyhedron disposed in the vicinity of the workpiece W. As a result of a configuration such as this, characteristics of the reference block B1 are easily ascertained and, therefore, the object recognition unit 50 can easily recognize the position of the reference block B1.

Here, the above-described embodiment can also be modified in the following manner. Sections that are identical to those according to the above-described embodiment are given the same reference numbers. Descriptions thereof are omitted.

The three-dimensional shape data of the reference blocks B1 and B3 can also be formed through combination of the three-dimensional image data respectively captured by the camera 30 in the first imaging position P1 and the second imaging position P2, and three-dimensional computer-aided design (CAD) data of the reference blocks B1 and B3. In addition, the three-dimensional shape data of the workpiece W and the placement portion Sn in the storage case H can be formed through combination of the three-dimensional image data respectively captured by the camera 30 in the first imaging position P1 and the second imaging position P2, and three-dimensional CAD data of the workpiece W and the placement portion Sn in the storage case H.

As shown in Fig. 1, the object recognition unit 50 can also perform calibration using a three-dimensional (3D) scanner 70 that has higher accuracy in detecting the position of an object than the camera 30. In this case, the object recognition unit 50 respectively performs calibration in a state in which the 3D scanner 70 is disposed in the first imaging position P1 and the second imaging position P2 (predetermined position). Then, the positions and attitudes (reference positions) of the reference blocks B1 and B3 recognized based on the three-dimensional images respectively capturing the reference blocks B1 and B3 from the first imaging position P1 and the second imaging position P2 by the 3D scanner 70 are acquired as the positional relationships between the reference blocks B1 and B3 and the camera 30, and registered.

As a result of a configuration such as this, the corresponding relationship between the coordinate system of the camera 30 and the coordinate system of the robot 20 can be accurately calibrated. Furthermore, the reference positions that are the positions of the reference blocks B1 and B3 recognized based on the images respectively captured from the first imaging position p1 and the second imaging position P2 can be more accurately acquired. Therefore, the deviation of the position of the camera 30 from the first imaging position P1 and the second imaging position P2 can be more accurately calculated. Furthermore, the position of the placement portion Sn in the storage case H can be more accurately recognized.

When the robot 20 grips the workpiece W in the supply section (one work area), a variation in relative positions of the robot 20 and the workpiece W occurs. In this case, a variation may occur in a position in which the workpiece W is placed in the operation of moving the gripped workpiece W to the storage section (another work area) and releasing (placing) the workpiece W.

Therefore, the object recognition unit 50 may calculate the deviation amount of the current position of the camera 30 from the first imaging position P1 based on the reference position and the position of the reference block B1 recognized based on the predetermined image, and recognize the position and attitude (position) of the workpiece based on the deviation amount and the predetermined image, after the workpiece W is gripped in the supply section, among the plurality of work areas. In addition, the robot 20 may perform the operation of moving the workpiece W from the supply section to the storage section and releasing the workpiece W based on the position and attitude of the workpiece W recognized by the object recognition unit 50, after the workpiece W is gripped.

As a result of a configuration such as this, the position and attitude of the workpiece W can be accurately recognized after the workpiece W is gripped, and the workpiece W can be moved from the supply section to the storage section and released in an accurate position (placed in an accurate position) based on the accurately recognized position and attitude of the workpiece W. Here, an operation of moving the workpiece W from the supply section to the processing section and processing the workpiece W can be performed based on the position and attitude of the workpiece W recognized by the object recognition unit 50 after the workpiece W is gripped in the supply section.

The deviation of the current position of the camera 30 from the first imaging position P1 is calculated based on the position of the reference block B1 recognized based on the three-dimensional image captured by the camera 30 from the current position and the position of the reference block B1 in the master data. The current position of the camera 30 is calculated based on the deviation amount and the information on the first imaging position P1 and the second imaging position P2 included in the parameters for converting the coordinates. In addition, the position and attitude (position) of the workpiece W can also be recognized based on the current position of the camera 30 and then above-described predetermined image.

As indicated by a broken line in Fig. 1, the robot control system 10 may include a plurality of robots 20. In this case, the reference blocks B1 and B3 (reference objects) are respectively provided in the plurality of work areas of the plurality of robots 20. In addition, the camera 20 is capable of respectively capturing images of the workpiece W (target object) and the placement portion Sn in the storage case H in the plurality of work areas of the plurality of robots 20. Specifically, the movable portion 41 of the slider 40 is capable of moving to the plurality of work areas of the plurality of robots 20. As a result of a configuration such as this, recognition of the position of the target object in operations by the plurality of robots 20 can be performed by the single camera 30. Consequently, the number of required cameras can be reduced.

In the above-described case, if the workpiece W and the placement portion Sn in the storage case H are included in the imaging field of view in a state in which the camera is capturing an image of a single reference block, a single reference block shared between the supply section and the storage section may be disposed. In addition, a single reference block may be disposed for each robot 20.

As the reference object serving as the positional reference, a portion of equipment (such as a portion of an apparatus or a portion of a support structure) present in the vicinity of the workpiece W and the placement portion Sn in the storage case H can also be used. The portion of equipment used as the reference object is preferably an object of which the position and shape do not change and has a characteristic portion easily recognizable by the camera 30. As a result of a configuration such as this, a portion of equipment present in the vicinity of the workpiece W and the placement portion Sn in the storage case H can be used as the reference object and, therefore, a special block or the like is not required to be disposed as the reference object.

The object recognition unit 50 may be included in the robot control apparatus 60 or the camera 30.

The robot 20 may be a single-arm, horizontal articulated robot. In addition, the robot may be a dual-arm articulated robot.

Here, the above-described embodiments and modification examples thereof can be combined within a combinable range.

Characteristic configurations extracted from the above-described embodiments and modification examples are described below.

### [Configuration 1]

A robot control system (10) including: a robot (20) that performs an operation on a target object (W) in each of a plurality of work areas; a movable camera (30) that is capable of moving separately from the robot and respectively capturing images of the target object in the plurality of work areas; and an object recognition unit (50) that is capable of recognizing a position of an object based on an image captured by the movable camera from a predetermined position (P1, P2), in which the movable camera acquires a predetermined image captured to include a reference object (B 1) serving as a positional reference and the target object in a field of view, the object recognition unit registers a position of the reference object recognized based on an image captured from the predetermined position as a reference position in advance, calculates a deviation amount of a position of the movable camera from the predetermined position based on the reference position and the position of the reference object recognized based on the predetermined image, and recognizes a position of the target object based on the deviation amount and the predetermined image, and the robot performs an operation on the target object based on the position of the target object recognized by the object recognition unit.

### [Configuration 2]

The robot control system according to configuration 1, in which: the robot includes a plurality of robots; the reference object is provided in each of the plurality of work areas of the plurality of robots, and the movable camera is capable of respectively capturing an image of the target object in each of the plurality of work areas of the plurality of robots.

### [Configuration 3]

The robot control system according to configuration 1 or 2, in which: the movable camera moves to a position in which the reference object and the target object are included in the field of view, in response to the reference object and the target object not being included in the field of view, and acquires the predetermined image.

### [Configuration 4]

The robot control system according to any one of configurations 1 to 3, in which: the object recognition unit is capable of recognizing a position of an object in a coordinate system of the robot as the position of the object based on an image captured by the movable camera from the predetermined position by performing calibration to calibrate a corresponding relationship between a coordinate system of the movable camera and the coordinate system of the robot.

### [Configuration 5]

The robot control system according to configuration 4, in which: the calibration is performed using a three-dimensional scanner (70) that has higher accuracy in detecting a position of an object than the movable camera, and the reference position is registered in advance using the three-dimensional scanner.

### [Configuration 6]

The robot control system according to any one of configurations 1 to 5, in which: the robot performs an operation of gripping the target object in one work area among the plurality of work areas, moving the target object to another work area, and releasing the target object.

### [Configuration 7]

The robot control system according to configuration 6, in which: the object recognition unit calculates a deviation amount of the position of the movable camera from the predetermined position based on the reference position and the position of the reference object recognized based on the predetermined image, and recognizes the position of the target object based on the deviation amount and the predetermined image, before the target object is gripped in the one work area among the plurality of work areas, and the robot performs the operation of gripping the target object based on the position of the target object recognized by the object recognition unit.

### [Configuration 8]

The robot control system according to configuration 6 or 7, in which: the object recognition unit calculates a deviation amount of the position of the movable camera from the predetermined position based on the reference position and the position of the reference object recognized based on the predetermined image, and recognizes the position of the target object based on the deviation amount and the predetermined image, after the target object is gripped in the one work area among the plurality of work areas, and the robot performs the operation of moving the target object from the one work area to another work area and releasing the target object based on the position of the target object recognized by the object recognition unit.

### [Configuration 9]

The robot control system according to any one of configurations, in which: the reference object is a block composed of an asymmetrical polyhedron disposed in a vicinity of the target object.

### [Configuration 10]

The robot control system according to any one of configurations 1 to 8, wherein: the reference object is a portion of equipment present in a vicinity of the target object.

While the present disclosure has been described with reference to embodiments thereof, it is to be understood that the disclosure is not limited to the embodiments and constructions. The present disclosure is intended to cover various modification examples and modifications within the range of equivalency. **In** addition, various combinations and configurations, and further, other combinations and configurations including more, less, or only a single element thereof are also within the spirit and scope of the present disclosure.

## Claims

1. A robot control system (10) comprising:
a robot (20) that performs an operation on a target object (W) in each of a plurality of work areas;
a movable camera (30) that is capable of moving separately from the robot and respectively capturing images of the target object in the plurality of work areas; and
an object recognition unit (50) that is capable of recognizing a position of an object based on an image captured by the movable camera from a predetermined position (P1, P2), wherein
the movable camera acquires a predetermined image captured to include a reference object (B1) serving as a positional reference and the target object in a field of view,
the object recognition unit registers a position of the reference object recognized based on an image captured from the predetermined position as a reference position in advance, calculates a deviation amount of a position of the movable camera from the predetermined position based on the reference position and the position of the reference object recognized based on the predetermined image, and recognizes a position of the target object based on the deviation amount and the predetermined image, and
the robot performs an operation on the target object based on the position of the target object recognized by the object recognition unit.

2. The robot control system according to claim 1, wherein:
the robot comprises a plurality of robots;
the reference object is provided in each of the plurality of work areas of the plurality of robots, and
the movable camera is capable of respectively capturing an image of the target object in each of the plurality of work areas of the plurality of robots.

3. The robot control system according to claim 1 or 2, wherein:
the movable camera moves to a position in which the reference object and the target object are included in the field of view, in response to the reference object and the target object not being included in the field of view, and acquires the predetermined image.

4. The robot control system according to claim 1 or 2, wherein:
the object recognition unit is capable of recognizing a position of an object in a coordinate system of the robot as the position of the object based on an image captured by the movable camera from the predetermined position by performing calibration to calibrate a corresponding relationship between a coordinate system of the movable camera and the coordinate system of the robot.

5. The robot control system according to claim 4, wherein:
the calibration is performed using a three-dimensional scanner (70) that has higher accuracy in detecting a position of an object than the movable camera, and
the reference position is registered in advance using the three-dimensional scanner.

6. The robot control system according to claim 1 or 2, wherein:
the robot performs an operation of gripping the target object in one work area among the plurality of work areas, moving the target object to another work area, and releasing the target object.

7. The robot control system according to claim 6, wherein:
the object recognition unit calculates a deviation amount of the position of the movable camera from the predetermined position based on the reference position and the position of the reference object recognized based on the predetermined image, and recognizes the position of the target object based on the deviation amount and the predetermined image, before the target object is gripped in the one work area among the plurality of work areas, and
the robot performs the operation of gripping the target object based on the position of the target object recognized by the object recognition unit.

8. The robot control system according to claim 6, wherein:
the object recognition unit calculates a deviation amount of the position of the movable camera from the predetermined position based on the reference position and the position of the reference object recognized based on the predetermined image, and recognizes the position of the target object based on the deviation amount and the predetermined image, after the target object is gripped in the one work area among the plurality of work areas, and
the robot performs the operation of moving the target object from the one work area to another work area and releasing the target object based on the position of the target object recognized by the object recognition unit.

9. The robot control system according to claim 1 or 2, wherein:
the reference object is a block composed of an asymmetrical polyhedron disposed in a vicinity of the target object.

10. The robot control system according to claim 1 or 2, wherein:
the reference object is a portion of equipment present in a vicinity of the target object.
